# EUROPEAN PATENT APPLICATION

(11) **EP 3 679 786 A1**
(43) Date of publication of application: **15.07.2020**
(21) Application number: 19190651.0
(22) Date of filing: 08.08.2019
(51) Int. Cl.: A01K 5/02, A01K 11/00, A01K 29/00, A01K 1/02

(54) **LIVE PIG QUANTITY CHECKING APPARATUS AND METHOD**

(30) Priority: 08.01.2019 CN 201910015034
(71) Applicant: Beijing Etag Technology Company., Ltd., Haidian District Beijing (CN)
(72) Inventor: ZHOU, Xingfu, Beijing, Beijing (CN); REN, Jiping, Beijing, Beijing (CN); PANG, Chao, Beijing, Beijing (CN); HU, Dongge, Beijing, Beijing (CN)
(74) Representative: Herrero & Asociados, S.L.

(57) **Abstract**

The present invention discloses a live pig quantity checking apparatus and method. The checking method includes: obtaining first electronic ear tag numbers of electronic ear tags within a period of time interval threshold range; determining whether live pigs in a monitored piggery all have a food intake activity, and if yes, determining a quantity of the live pigs according to the first electronic ear tag numbers; and if no, determining live pigs not having the food intake activity according to the first electronic ear tag numbers. The live pig quantity checking apparatus and method of the present invention improves the live pig quantity checking efficiency.

## Description

### TECHNICAL FIELD

The present invention relates to the field of live pig quantity checking, and in particular to a live pig quantity checking apparatus and method.

### BACKGROUND

Along with the development of animal husbandry, the scale of a livestock farm is increasingly larger. During an examination process of a piggery in the livestock farm, a live pig quantity in the piggery is an important asset indicator and an important examination indicator. A traditional live pig quantity checking manner relies on a farmer to check independently. However, relying on the farmer to count the quantity is a job consuming labor and time; and moreover, the quantity is easily miscounted or even is falsely reported.

### SUMMARY

An objective of the present invention is to provide a live pig quantity checking apparatus and method, to solve the problems of time consumption, labor consumption and low efficiency of a manual checking manner.

To achieve the above objective, the present invention provides the following solutions.

A live pig quantity checking apparatus includes: a pig raising robot, a reader antenna, electronic ear tags, a data transfer station and an upper computer, where
the pig raising robot includes a material storage groove; the reader antenna is disposed on an outer surface of the pig raising robot, and is disposed on an upper portion of the material storage groove; the reader antenna transmits data with the data transfer station; and the data transfer station transmits the data with the upper computer; and
the electronic ear tags are respectively disposed on live pigs in a monitored piggery; the electronic ear tags are first electronic ear tag numbers for the live pigs; the first electronic ear tag numbers are in one-to-one correspondence with the live pigs; the first electronic ear tag numbers are identified by the reader antenna; and the reader antenna uploads the identified first electronic ear tag numbers to the data transfer station.

Optionally, the reader antenna transmits the data with the data transfer station in a wired manner or a wireless manner.

Optionally, the data transfer station transmits the data with the upper computer in a wired manner or a wireless manner.

A live pig quantity checking method includes:
obtaining first electronic ear tag numbers of electronic ear tags within a period of time interval threshold range;
determining whether live pigs in a monitored piggery all have a food intake activity to obtain a first determining result;
if the first determining result indicates that the live pigs in the monitored piggery all have the food intake activity, determining a quantity of the live pigs according to the first electronic ear tag numbers; and
if the first determining result indicates that the live pigs in the monitored piggery do not have the food intake activity, determining live pigs not having the food intake activity according to the first electronic ear tag numbers.

Optionally, the determining a quantity of the live pigs according to the first electronic ear tag numbers specifically includes:
counting the collected first electronic ear tag numbers, deleting repeatedly collected first electronic ear tag numbers and determining the quantity of the live pigs.

Optionally, the determining live pigs not having the food intake activity according to the first electronic ear tag numbers specifically includes:
obtaining all first electronic ear tag numbers, and establishing a first electronic ear tag number database;
comparing the collected first electronic ear tag numbers with second electronic ear tag numbers in the first electronic ear tag number database, and determining whether the first electronic ear tag number database has second electronic ear tag numbers different from the first electronic ear tag numbers to obtain a second determining result; and
if the second determining result indicates that the first electronic ear tag number database has the second electronic ear tag numbers different from the first electronic ear tag numbers, determining live pigs corresponding to the second electronic ear tag numbers different from the first electronic ear tag numbers as the live pigs not having the food intake activity.

Optionally, the determining live pigs corresponding to the second electronic ear tag numbers different from the first electronic ear tag numbers as the live pigs not having the food intake activity specifically includes:
determining whether the live pigs not having the food intake activity are in the monitored piggery to obtain a third determining result;
if the third determining result indicates that the live pigs not having the food intake activity are in the monitored piggery, determining that the live pigs not having the food intake activity are abnormal; and
if the third determining result indicates that the live pigs not having the food intake activity are not in the monitored piggery, determining that the live pigs not having the food intake activity are sold.

Optionally, after determining that the live pigs not having the food intake activity are abnormal, the live pig quantity checking method further includes:
obtaining first electronic ear tag numbers of the live pigs not having the food intake activity, and first electronic ear tag numbers same as the second electronic ear tag numbers; and
determining a quantity of live pigs in the monitored piggery according to the first electronic ear tag numbers of the live pigs not having the food intake activity, and the first electronic ear tag numbers same as the second electronic ear tag numbers, and making an alarm to a farmer.

According to the specific embodiments provided by the present invention, the present invention discloses the following technical effects: according to the live pig quantity checking apparatus and method disclosed by the present invention, with electronic ear tags on live pigs in a monitored piggery, a quantity of the live pigs in the monitored piggery is automatically checked within a period of time interval; and thus, the problems of easy count leakage and easy miscount of manual checking are prevented, and the live pig quantity checking efficiency is improved.

### BRIEF DESCRIPTION OF THE DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a structural diagram of a live pig quantity checking apparatus provided by the present invention.
FIG. 2 is a structural schematic diagram of a pig raising robot provided by the present invention.
FIG. 3 is a structural schematic diagram of an electronic ear tag provided by the present invention.
FIG. 4 is a structural schematic diagram of a reader antenna provided by the present invention.
FIG. 5 is a structural schematic diagram of a data transfer station provided by the present invention.
FIG. 6 is a flow chart of a live pig quantity checking method provided by the present invention.

### DETAILED DESCRIPTION

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

An objective of the present invention is to provide a live pig quantity checking apparatus and method, which can improve the live pig quantity checking efficiency.

To make the foregoing objective, features, and advantages of the present invention clearer and more comprehensible, the present invention is further described in detail below with reference to the accompanying drawings and specific embodiments.

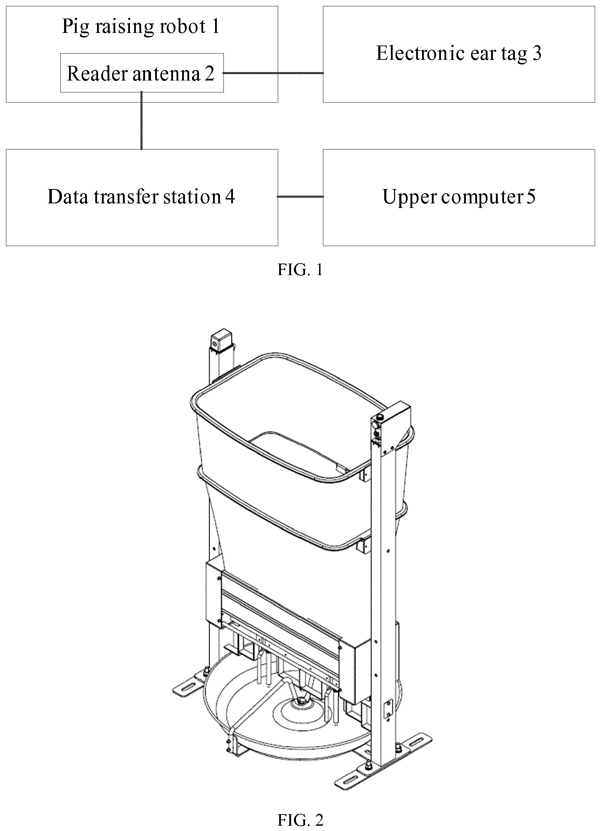

FIG. 1 is a structural diagram of a live pig quantity checking apparatus provided by the present invention. As shown in FIGs. 1-5, a live pig quantity checking apparatus includes: a pig raising robot 1, a reader antenna 2, electronic ear tags 3, a data transfer station 4 and an upper computer 5; the pig raising robot 1 includes a material storage groove; the reader antenna 2 is disposed on an outer surface of the pig raising robot 1, and is disposed on an upper portion of the material storage groove; the reader antenna 2 transmits data with the data transfer station 4; the data transfer station 4 transmits the data with the upper computer 5; the electronic ear tags 3 are respectively disposed on live pigs in a monitored piggery; the electronic ear tags 3 are first electronic ear tag 3 numbers for the live pigs; the first electronic ear tag 3 numbers are in one-to-one correspondence with the live pigs; the first electronic ear tag 3 numbers are identified by the reader antenna 2; and the reader antenna 2 uploads the identified first electronic ear tag 3 numbers to the data transfer station 4.

In actual applications, the reader antenna 2 transmits the data with the data transfer station 4 in a wired manner or a wireless manner; and the data transfer station 4 transmits the data with the upper computer 5 in a wired manner or a wireless manner.

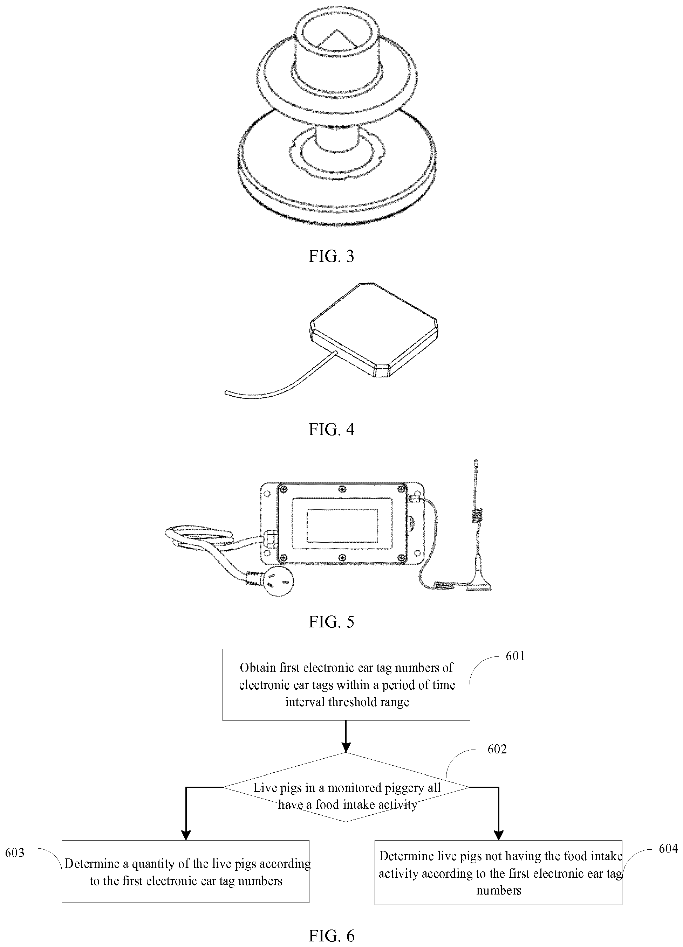

FIG. 6 is a flow chart of a live pig quantity checking method provided by the present invention. As shown in FIG. 6, the live pig quantity checking method includes the following steps.

Step 601: obtain first electronic ear tag numbers of electronic ear tags within a period of time interval threshold range.

Step 602: determine whether live pigs in a monitored piggery all have a food intake activity, execute the step 603 if yes, and execute the step 604 if no.

Step 603: determine a quantity of the live pigs according to the first electronic ear tag numbers.

Step 603 specifically includes: count the collected first electronic ear tag numbers, delete repeatedly collected first electronic ear tag numbers and determine the quantity of the live pigs.

Step 604: determine live pigs not having the food intake activity according to the first electronic ear tag numbers.

Step 604 specifically includes: obtain all first electronic ear tag numbers, and establish a first electronic ear tag number database; compare the collected first electronic ear tag numbers with second electronic ear tag numbers in the first electronic ear tag number database, determine whether the first electronic ear tag number database has second electronic ear tag numbers different from the first electronic ear tag numbers, and if yes, determine live pigs corresponding to the second electronic ear tag numbers different from the first electronic ear tag numbers as the live pigs not having the food intake activity.

In actual applications, the step of determining live pigs corresponding to the second electronic ear tag numbers different from the first electronic ear tag numbers as the live pigs not having the food intake activity specifically includes: determine whether the live pigs not having the food intake activity are in the monitored piggery, determine that the live pigs not having the food intake activity are abnormal if yes, and determine that the live pigs not having the food intake activity are sold if no.

In actual applications, after determining that the live pigs not having the food intake activity are abnormal, the live pig quantity checking method further includes the following steps.

Obtain first electronic ear tag numbers of the live pigs not having the food intake activity, and first electronic ear tag numbers same as the second electronic ear tag numbers; and determine a quantity of live pigs in the monitored piggery according to the first electronic ear tag numbers of the live pigs not having the food intake activity, and the first electronic ear tag numbers same as the second electronic ear tag numbers, and make an alarm to a farmer.

According to the present invention, the quantity of the live pigs is automatically checked, stored and recorded for query and use of a user, and thus the live pig quantity checking efficiency is improved.

Each embodiment of the present specification is described in a progressive manner, each embodiment focuses on the difference from other embodiments, and the same and similar parts between the embodiments may refer to each other.

Several examples are used for illustration of the principles and implementation methods of the present invention. The description of the embodiments is used to help illustrate the method and its core principles of the present invention. In addition, those skilled in the art can make various modifications in terms of specific embodiments and scope of application in accordance with the teachings of the present invention. In conclusion, the content of this specification shall not be construed as a limitation to the invention.

## Claims

1. A live pig quantity checking apparatus, comprising: a pig raising robot, a reader antenna, electronic ear tags, a data transfer station and an upper computer, wherein
the pig raising robot comprises a material storage groove; the reader antenna is disposed on an outer surface of the pig raising robot, and is disposed on an upper portion of the material storage groove; the reader antenna transmits data with the data transfer station; and the data transfer station transmits the data with the upper computer; and
the electronic ear tags are respectively disposed on live pigs in a monitored piggery; the electronic ear tags are first electronic ear tag numbers for the live pigs; the first electronic ear tag numbers are in one-to-one correspondence with the live pigs; the first electronic ear tag numbers are identified by the reader antenna; and the reader antenna uploads the identified first electronic ear tag numbers to the data transfer station.

2. The live pig quantity checking apparatus according to claim 1, wherein the reader antenna transmits the data with the data transfer station in a wired manner or a wireless manner.

3. The live pig quantity checking apparatus according to claim 1, wherein the data transfer station transmits the data with the upper computer in a wired manner or a wireless manner.

4. A live pig quantity checking method, comprising:
obtaining first electronic ear tag numbers of electronic ear tags within a period of time interval threshold range;
determining whether live pigs in a monitored piggery all have a food intake activity to obtain a first determining result;
if the first determining result indicates that the live pigs in the monitored piggery all have the food intake activity, determining a quantity of the live pigs according to the first electronic ear tag numbers; and
if the first determining result indicates that the live pigs in the monitored piggery do not have the food intake activity, determining live pigs not having the food intake activity according to the first electronic ear tag numbers.

5. The live pig quantity checking method according to claim 4, wherein the determining a quantity of the live pigs according to the first electronic ear tag numbers specifically comprises:
counting the collected first electronic ear tag numbers, deleting repeatedly collected first electronic ear tag numbers and determining the quantity of the live pigs.

6. The live pig quantity checking method according to claim 4, wherein the determining live pigs not having the food intake activity according to the first electronic ear tag numbers specifically comprises:
obtaining all first electronic ear tag numbers, and establishing a first electronic ear tag number database;
comparing the collected first electronic ear tag numbers with second electronic ear tag numbers in the first electronic ear tag number database, and determining whether the first electronic ear tag number database has second electronic ear tag numbers different from the first electronic ear tag numbers to obtain a second determining result; and
if the second determining result indicates that the first electronic ear tag number database has the second electronic ear tag numbers different from the first electronic ear tag numbers, determining live pigs corresponding to the second electronic ear tag numbers different from the first electronic ear tag numbers as the live pigs not having the food intake activity.

7. The live pig quantity checking method according to claim 6, wherein the determining live pigs corresponding to the second electronic ear tag numbers different from the first electronic ear tag numbers as the live pigs not having the food intake activity specifically comprises:
determining whether the live pigs not having the food intake activity are in the monitored piggery to obtain a third determining result;
if the third determining result indicates that the live pigs not having the food intake activity are in the monitored piggery, determining that the live pigs not having the food intake activity are abnormal; and
if the third determining result indicates that the live pigs not having the food intake activity are not in the monitored piggery, determining that the live pigs not having the food intake activity are sold.

8. The live pig quantity checking method according to claim 7, after determining that the live pigs not having the food intake activity are abnormal, further comprising:
obtaining first electronic ear tag numbers of the live pigs not having the food intake activity, and first electronic ear tag numbers same as the second electronic ear tag numbers; and
determining a quantity of live pigs in the monitored piggery according to the first electronic ear tag numbers of the live pigs not having the food intake activity, and the first electronic ear tag numbers same as the second electronic ear tag numbers, and making an alarm to a farmer.
